# EUROPEAN PATENT SPECIFICATION

(11) **EP 4 209 285 B1**
(45) Date of publication and mention of the grant of the patent: **03.04.2024**
(21) Application number: 23150753.4
(22) Date of filing: 09.01.2023
(51) Int. Cl.: B09B 3/65, B09B 3/70, B01J 20/12, B01J 20/30, B01J 20/34, B09B 101/95

(54) **PLANT AND METHOD FOR THE REGENERATION OF SPENT BLEACHING SANDS/EARTHS AND THE PRODUCTION OF BIOGAS**
ANLAGE UND VERFAHREN ZUR REGENERIERUNG VON GEBRAUCHTEN BLEICHSÄNDEN/BLEICHERDEN UND ZUR HERSTELLUNG VON BIOGAS
INSTALLATION ET PROCEDE POUR LA REGENERATION DE SABLES/TERRES DE BLANCHIMENT USEES ET LA PRODUCTION DE BIOGAZ

(30) Priority: 11.01.2022 IT 202200000269
(43) Date of publication of application: 12.07.2023
(73) Proprietor: C.R. Evolution S.r.l., 70126 Bari (IT)
(72) Inventor: GALASSINI, Giuseppe, 00047 Marino (Roma) (IT)
(74) Representative: Biggi, Cristina

(56) References cited:
- HUANG YI-PIN ET AL: "Biodiesel production from residual oils recovered from spent bleaching earth", RENEWABLE ENERGY, vol. 35, no. 1, 1 January 2010 (2010-01-01), pages 269-274, XP055949942, GB ISSN: 0960-1481, DOI: 10.1016/j.renene.2009.07.014
- TIPPKÖTTER NILS ET AL: "Recycling of spent oil bleaching earth as source of glycerol for the anaerobic production of acetone, butanol, and ethanol with Clostridium diolis and lipolytic Clostridium lundense", ENGINEERING IN LIFE SCIENCES, vol. 14, no. 4, 1 July 2014 (2014-07-01), pages 425-432, XP093046612, DE ISSN: 1618-0240, DOI: 10.1002/elsc.201300113

## Description

### FIELD OF THE INVENTION

The present invention relates to a plant and a method for the treatment/regeneration of spent bleaching sands/earths and/or acid water from plants for the production of biofuels. The plant and method of the invention simultaneously enable the production of biogas.

### STATE OF THE ART

In the context of CO₂ emission reduction projects, biofuels are fuels that have become increasingly popular in recent years. They are obtained by processing organic substances such as plants or waste of animal origin and are today used to fuel combustion engines, generate electricity and produce natural gas.

The term biofuel identifies all fuels derived by processing biomasses, i.e. organic substances of both plant and animal origin. In simpler terms, they are fuels obtained from the direct cultivation of several plants, agricultural or animal husbandry waste, wood processing and algae.

These fuels are used as an alternative to fossil fuels for wholly similar purposes. They can in fact fuel combustion engines, generate natural gas or be exploited to produce electricity. Precisely because they are obtained from both plant and animal organic substances, biofuels are considered renewable sources; unlike oil, coal and other minerals, their availability is not limited either in amount or over time.

The development of biofuels began in the second half of the last century, mainly in response to two challenges: to find a valid alternative to oil, given that worldwide deposits were already being depleted, and to discover fuels that were less polluting on an environmental level. The aim was to define a virtuous circle where the waste products of certain human activities, such as agriculture or animal husbandry precisely, could be reused as economical, highly efficient fuels with a low CO₂ impact and free of heavy metals that are harmful to health.

Today it is possible to obtain biofuels from a whole variety of sources. As for fuel obtained in the agricultural sector, plants such as maize, soybean, rape and sunflower are preferred, but there is also the recovery of vegetable oils of industrial origin, wood processing waste, several marine algae, as well as the recycling of manure and other fertilisers of animal origin.

Biofuels are produced by means of:
- a complex fermentation process in special facilities: over time, a controlled microclimate and the action of anaerobic bacteria - i.e. bacteria able to survive in the absence of oxygen - bring about the decomposition of organic substance, which generates an inflammable vegetable oil and natural gas;
- a process first of deoxygenation and then isomerisation, to render the feedstocks wholly similar to the diesel fuel currently on the market.

With regard to the starting raw material (feedstock), a radical change has been observed in recent years:
- It started around the beginning of the 2000s with first-generation feedstocks, mainly palm oil, which could be sent directly to diesel desulfurization plants without producing processing waste, initially in blends with classic hydrocarbon feedstocks.
- When the construction of plants dedicated to the treatment of exclusively green feedstocks began, blending was integrated with second-generation feedstocks, mainly of plant origin, such as palm oil mill effluent (POME), palm oil fatty acid distillate (PFEAD), other virgin vegetable oils (rapeseed, maize, etc.) or oils already used in the food industry, such as UCO (used cooking oil), and it was necessary to introduce a pre-treatment of feedstocks to remove heavy metals (bleaching pre-treatment).
- At present, thanks also to the political will to eliminate plant feedstocks, such as palm oil, that are a dietary staple of some populations, mainly in Central America, and the deforestation phenomena associated therewith, we are observing a rapid transition to third-generation feedstocks (animal fats). This change has made it necessary to add a further degumming pre-treatment upstream of the bleaching treatment.

At first, the limit to the modification of feedstocks was the content of heavy metals and phosphatides. The former impacted on the catalytic activity of the catalysts of the treatment units (deoxygenation and isomerisation), whilst the latter resulted in problems in the plant loading filters and a difficult management of pressure drops in catalytic reactors (need for frequent shutdowns for skimming). For this reason, the first pre-treatment unit, called bleaching unit, was introduced.

Subsequently, when some thought of introducing, among feedstocks, those of animal origin, it was realised that a bleaching treatment was no longer sufficient on its own to manage phosphatides and a degumming treatment was added upstream of the bleaching treatment.

The degumming process is necessary for "soft" oils, such as sunflower, maize, soybean and rapeseed oils, waste oils originating from food preparation (UCOs) and fats of animal origin (AF), and is composed of:
▪ Acid reaction to render the gums hydratable (soluble);
▪ Base reaction to agglomerate the gums;
▪ Separation of gums from the oil by centrifugation;
▪ Acid washing to further reduce the content of phosphorus and metals in the oil;
▪ Drying by means of a vacuum treatment to reduce residual moisture.

The bleaching process is a cold process consisting in the absorption of gums or phosphatides still present in the oil on the bleaching earths.

The bleaching treatment is the only treatment necessary when refining oils with a small content of gums and metals, such as palm oil, palm kernel oil, and coconut oil, since the gum content in these oils is limited.

The first step of the bleaching process, which consists in adding acid and a small amount of bleaching earth to the oil, is followed by filtration. This treatment reduces not only the content of residual phosphatides, but also the content of impurities and metals.

After the treatment, the bleaching earth is removed from the oil by filtration with a filter press, whereby an oil with a very low content of impurities and metals is obtained.

At present, spent bleaching earths (SBE) are sent to a storage tank and disposed of as industrial waste.

As industrial waste it is considered "dangerous goods" according to UN 3088- code 4.2 (spent Bleaching Earths) with waste code 07 06 10.

With the transition from second-generation feedstocks to third-generation feedstocks we are observing an increase in the production of industrial waste (spent bleaching earths, gummy water and soapstock) which needs to be treated outside the refinery, with a negative impact both in terms of CO₂ emission and the economic returns in relation to biofuel production costs.

There is thus a greatly felt need in the sector to provide a plant and a method for the treatment/regeneration of spent bleaching earths and/or acid water from plants for the production of biofuels which enable biogas to be produced at the same time.

A process for the production of biodiesel from residual oils recovered from spent bleaching earth is known from Document Huang Yi-Pin et al., "Biodiesel production from residual oils recovered from spent bleaching earth", Renewable Energy, vol. 35, no. 1, 1 January 2010 (2010-01-01), pages 269-274.

### SUMMARY OF THE INVENTION

The present invention relates to a method of treating or regenerating spent bleaching earths from a plant for the production of biofuels according to claim 1, in particular from the bleaching pre-treatment of feedstocks of plant origin that are used for the production of biofuels. The method comprises a first pre-treatment step in which the bleaching earths mixed with neutral water or with gummy acid water originating from the same plants for the production of biofuel, in particular from the degumming treatment carried out upstream of the bleaching treatment when the feedstocks are also of animal origin, are neutralised by adding a base, preferably calcium hydroxide, in order to bring the pH to neutrality.

Subsequently, the neutralised bleaching earths are subjected to anaerobic digestion by a biomass comprising anaerobic bacteria. During the digestion step a biogas, which may optionally be subjected to purification, and a solid/liquid suspension are generated.

The solid/liquid suspension is subsequently separated into a solid component comprising the bleaching earths and a liquid component comprising the digestate.

The bleaching earths are then subjected to a heat treatment, at a temperature of between 400°C and 600°C. The combustion fumes produced are subsequently treated at a high temperature, preferably between 800°C and 1200°C, preferably for a time of at least 3 seconds to remove the dioxins.

Then follows reactivation and removal of the metals from the heat-treated bleaching earths with the aid of an acid solution and drying of the regenerated earths to render them usable in a plant for the production of biofuels.

The plant of the invention according to claim 8 comprises:
a) a pre-treatment section where the bleaching earths from a plant for the production of biofuel, in a mixture with neutral water or gummy acid water, are subjected to a base treatment;
b) an anaerobic digestion section comprising at least two digester bioreactors wherein the mixture comprising the neutralised bleaching earths is brought into contact with a biomass;
c) a dehydration/separation section comprising at least one separator for separating the bleaching earths from the digestate;
d) a regeneration section comprising at least one combustion unit for carrying out a heat treatment of the bleaching earths from the dehydration section;
e) a reactivation section comprising at least one reactor wherein the bleaching earths from the heat treatment are brought into contact with an acid solution;
f) a drying section wherein the acidified bleaching earths are heated to remove excess moisture.

### BRIEF DESCRIPTION OF THE FIGURES

Figure 1 shows a block diagram of a preferred embodiment of the method according to the invention;
Figure 2 shows a preferred embodiment of a plant according to the present invention.

### DETAILED DESCRIPTION OF THE INVENTION

The method of treatment and/or regeneration of the spent bleaching earths from plants for the production of biofuels according to claim 1 comprises the following steps:
a) pre-treatment of the spent bleaching earths;
b) anaerobic digestion of the spent bleaching earths and production of biomethane;
c) dehydration or separation of the spent bleaching earths from the digestate;
d) a heat treatment of the spent bleaching earths separated from the digestate at a temperature between 400°C and 600°C (regeneration step).
e) an acid treatment for reactivating the bleaching earths (step of reactivation and removal of the absorbed heavy metals);
f) a drying heat treatment.

The bleaching earths that are treated/regenerated with the method of the invention come from plants for the production of biofuels that use, as raw material (feedstock), plant or animal sources, such as, for example, crops grown for the purpose (maize, rape, soybean, sunflower), vegetable oils, such as palm, rape, or maize oil, used cooking oil (UCO), agricultural or animal husbandry waste, wood processing waste, algae, or animal fats.

If the feedstocks comprise oils with a low gum and metal content, such as palm oil, palm kernel oil or coconut oil, it is necessary to carry out only the so-called "bleaching" pre-treatment, in which the bleaching earths are used to adsorb the phosphatides and the small amount of gums present in these oils. The bleaching earths consist of clays, in particular bentonites, which adsorb the gums and/or phosphatides present in these vegetable oils.

If, on the other hand, the feedstocks are spent oils of food origin (UCO), fats of animal origin and oils such as sunflower, maize, soybean and rapeseed oil, with a high gum and metal content, it is necessary also to carry out a "degumming" treatment upstream of the bleaching treatment. In this case, waste acid water is generated, and it can also be treated with the method of the invention.

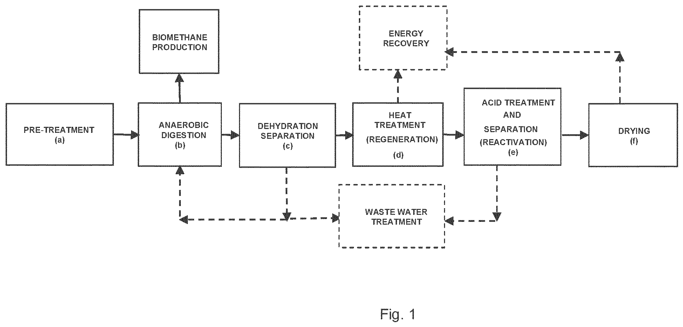

With reference to the flow diagram in figure 1, in the **pre-treatment step a)**, the bleaching earths from the bleaching pre-treatment are mixed with neutral water and/or gummy acid water from a degumming treatment, realising in the latter case a method of treatment of the acid water from a plant for the production of biofuels, in addition to a method of treatment/regeneration of the bleaching earths.

After the bleaching earths have been mixed with water, the mixture undergoes homogenisation.

Subsequently, the pre-treatment envisages the neutralisation of the mixture/homogenate with a base, preferably calcium hydroxide, caustic soda and/or milk of lime.

The mixture/homogenate is heated to a temperature below/equal to 100°C, preferably between 50°C and 80°C. Heating preferably takes place by means of a heating fluid.

The pH the mixture/homogenate must reach is a neutral pH, preferably between 6 and 7.5.

Once neutralised, the mixture/homogenate is sent to the **anaerobic digestion step b)**, in which it is brought into contact with a bacterial biomass at a temperature below 100°C, preferably between 50°C and 80°C. The bacterial biomass comprises anaerobic bacteria, preferably recycled/recovered from other digesters.

The heating is carried out by means of a heating fluid or with other heating systems. The anaerobic digestion takes place for a time between 21 and 28 days, preferably between 22 and 25 days.

The pH is preferably adjusted in a range of values between 7 and 8 to favour digestion.

During the anaerobic digestion step the following are produced: biogas, which after purification in biomethane will be collected and in part reused as fuel and a solid/liquid suspension (digestate) that is sent to the **separation/dehydration step c)**.

A part of the digestate leaving the digesters is not sent to the subsequent separation/dehydration section, but is rather fed back into the digesters for the purpose of re-inoculating the anaerobic bacteria present in the digestor.

In a preferred embodiment, the biogas produced is sent to a **purification step b1)** in order to remove H₂S and siloxanes (not shown in figure 1). The purification step comprises: an abatement of H₂S by passing the biogas through a catalytic iron filter (CIF), preferably through at least 2, 3 or 4 filters in series, and/or further abatement of the residual H₂S by passing it through at least one activated carbon absorber.

The catalytic iron filter allows up to about 75% of the H₂S content to be removed, whereas the treatment with a catalytic absorber allows the concentration of H₂S in the biogas to be reduced to values below 200 ppm.

The two purification treatments can be applied in series, one after the other, for example first the treatment with the CIF filter and subsequently the treatment with an activated carbon absorber. Alternatively, the two treatments can be applied individually according to the biogas purification requirements.

The purification step also comprises a further treatment to remove siloxanes by passing the biogas through at least one catalytic absorber, preferably through at least two catalytic absorbers.

This further treatment can be alternative to the first two or carried out in addition to the first two. It can take place upstream of the first two or after the first two.

In the **separation/dehydration step c)** the liquid phase of the digestate is separated from the solid component comprising the bleaching sands, preferably by gravity, for example using a deep cone thickener, and/or by centrifugation.

The liquid phase comprising the digestate is sent off for waste water treatment or directly to the sewer system, without prior treatment, if the wastewater is sufficiently pure to be discharged into the sewer.

In the **regeneration step d)**, the bleaching earths separated from the digestate are subjected to a **heat treatment** at between 400°C and 600°C, preferably between 400 and 500°C. The combustion fumes are preferably sent to a post-combustion treatment at a temperature between 800°C and 1200°C, preferably between 800°C and 1100°C.

The post-combustion treatment is applied for at least 3 seconds and serves to remove the dioxins.

In the **reactivation step e)**, the bleaching earths are brought into contact with an acid solution at a temperature between 60°C and 100°C for a time between 20 and 100 minutes.

The acid solution is then **separated** from the bleaching earths and reused at least in part for the reactivation of the bleaching earths and in part sent off for disposal.

Finally, the bleaching earths are subjected to a **heat/drying treatment** in **step f),** at a temperature between 600 and 700°C, in order to ready them for reuse in a plant for the production of biofuel.

In a preferred embodiment, the method envisages recycling energy by using the fumes from the bleaching earths regeneration step d) and from the drying heat treatment of step f). After removal of the dioxin, the fumes from step d) are used for the heat/drying treatment of step f), before being released into the atmosphere. The fumes from step d) and/or f) are also used to generate a hot fluid, preferably tempered/hot water, which can be used to heat the reaction mixture of the pre-treatment step a) and/or introduced into the digestion reaction.

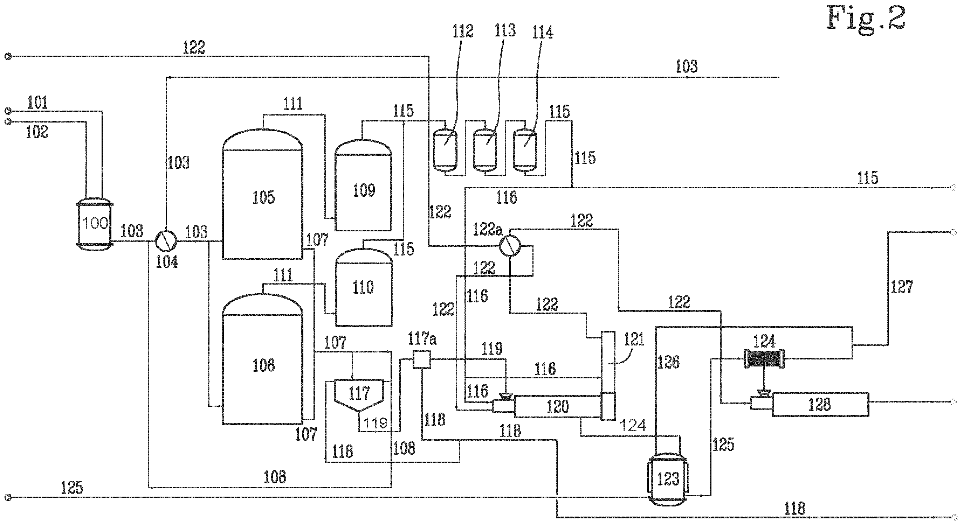

With reference to figure 2, the invention also relates to a plant for treating or regenerating spent bleaching sands/earths from the production of biofuel, in particular from the bleaching pre-treatment. The plant also serves to treat the acid water from the production of biofuel, in particular from the degumming pre-treatment. The plant provides for simultaneous production of biogas.

The plant of the invention comprises a pre-treatment section comprising a neutralisation reactor (100) and at least a first line (101) connected to a plant for the production of biofuel in order to feed, into the neutralisation reactor, the spent bleaching earths from the bleaching pre-treatment to which the raw materials used to produce biofuel are subjected.

In one embodiment, the pre-treatment section comprises at least a second line (102) for feeding, into the neutralisation reactor, neutral water or acid water from a plant for the production of biofuel, in particular from the degumming pre-treatment of the raw materials used to produce biofuel. In the latter case the line (102) is connected to a plant for the production of biofuel.

The neutralisation reactor (100) comprises a base, for example calcium hydroxide, and a stirrer for maintaining the aqueous suspension comprising the bleaching earths under stirring.

The neutralisation reaction of the suspension of bleaching earths takes place at a temperature below/equal to 100°C, preferably between 50°C and 80°C, by means of a heat exchange with a hot fluid, for example tempered water from a tank (not shown in the figure). A line (103) coming from the tank creates a closed circuit with tempered water that is used to recover part of the energy developed in the heat regeneration step. In one embodiment, the line (103) serves both the reactor (100) and the digesters (105, 106). In this manner, the digesters are also heated by means of a heat exchange with the hot fluid transported by the line (103). In this case, the temperature of the fluid must be kept below 100°C to safeguard the bacterial biomass contained in the digesters.

In one embodiment, the hot fluid is heated using the heat originating from the regeneration step d) and drying step f). This embodiment is not shown in figure 2.

Present in one embodiment there is a heat exchanger (104) through which the heating fluid of the line (103) is conveyed to the neutralisation reactor (100) and optionally to the digesters (105, 106). There is a possible variant of the plant in which the heating fluid of the neutralisation reactor and of the digesters comes from different lines and from different heated tanks. Alternatively, it is possible that the suspension in the neutralisation reactor is heated with an alternative system that does not envisage a heat exchange with a heating fluid, for example by electricity, preferably self-produced.

The neutralisation reactor comprises a means for checking the pH, for example an inline pH meter or analysis performed by an operator. The bleaching earth suspension must be brought to a neutral pH, preferably to between 7 and 7.5.

Downstream of the pre-treatment section, the plant comprises an anaerobic digestion section which comprises at least two anaerobic digesters (105, 106) into which the neutral suspension of bleaching earths from the neutralisation reactor is conveyed. The neutral suspension of bleaching earths is conveyed from the neutralisation reactor through a line not shown in the figures. The lines are provided with a system of pumps for drawing in the neutral suspension and pushing it towards the digesters. There are at least 2 anaerobic digesters, but they may also be present in a larger number, and they comprise a bacterial biomass that serves to digest the substances adsorbed onto the bleaching earths and present in the neutral suspension.

The digesters are equipped with systems for controlling the pH and temperature. The temperature is controlled by using a heating fluid transported by the line (103) or with other systems, as explained above.

The pH is adjusted by adding calcium hydroxide, milk of lime or caustic soda.

Most of the digestate leaving the digesters is sent to the subsequent separation section through the line (107), whilst a small part of the digestate is recirculated to the digesters through the line (108).

During the digestion, biogas is formed; it is collected in at least two gasometers (109, 110), each connected to a digestor through the lines (111).

In one embodiment, the gasometers comprise at least 3 membranes and a compressor which serves to draw in the biogas and bring it to a pressure compatible with the plant network.

The gasometers are connected to a biogas purification section, if present. This purification section is optional and may also not be present.

The purification section comprises at least two reactors for the abatement/removal of H₂S (112, 113) and at least one reactor for the removal of siloxanes (114). These reactors can be operated in series, one after the other, or they can function alternately.

The reactors for the abatement of H₂S are preferably catalytic iron filters (CIF) and/or activated carbon filters. The reactor for the removal of siloxanes is preferably a catalytic absorber.

The line (115) connects the gasometers to the purification section, if present, or directly to the collection of the biogas for other uses. If the purification section is present, the line (115) transports the biogas to the purification reactors and subsequently conveys the purified biogas to be collected for other uses.

In a preferred embodiment, the biogas, purified or not purified, is partially sent to the regeneration section (first and second heat treatment) through the line (116) and thus used to maintain/adjust the regeneration temperature.

Downstream of the digestion step, there is a dehydration/separation section that comprises at least one separation unit (117), connected to the digesters by means of the line (107), which serves to transport the solid/liquid suspension (digestate).

The separation unit (117) preferably comprises a solid/liquid separator, for example a deep cone thickener, which works by gravity, and/or a centrifuge (117a).

The liquid phase (liquid digestate) leaving the separation unit (117 and/or 117a) is sent off for waste water treatment or to the sewer drain through a line (118) coming out of the separation unit (117 and/or 117a).

The solid phase comprising the bleaching earths is sent to the regeneration section through the line (119).

The regeneration section comprises a first heating unit (120) and preferably a second heating unit (121).

The first heating unit (120) is preferably a rotary oven that reaches temperatures between 400°C and 600°C, preferably between 400 and 500°C, and into which biogas transported by the line (116) coming from the gasometers and/or from the purification section may be blown. In addition or as an alternative to the biogas, the temperature is maintained/controlled by blowing in hot air transported by the line (122) coming from a special generator and/or recycled from the hot air leaving the second heating unit (121). A heat exchanger (122a) is optionally present on the line (122).

The second heating unit (121) is preferably an afterburner where the fumes from the heat treatment of the solid step comprising bleaching earths are treated at a temperature between 800°C and 1200°C, preferably between 800°C and 1100°C so as to remove the dioxins. Biogas and/or hot air from the line (116) and/or (122) is also blown into the afterburner in order to maintain/increase the combustion temperature.

Downstream of the regeneration section there is a reactivation section comprising a reactor (123) into which the regenerated bleaching earths coming from the heat regeneration through the line (124) and an acid solution coming through the line (125) are introduced.

The reactor (123) is preferably provided with a thermostatic jacket that has the function of maintaining a constant temperature. The reactor is preferably equipped with a mixer to favour the reactivation reaction, at the end of which an acidic solid/liquid suspension is formed.

The acidic solid/liquid suspension is sent from the reactor (123) to a separator (124), preferably a filter press, through the line (125), wherein the acid solution is separated from the solid part comprising the bleaching earths.

The acid solution is partially recirculated to the reactor (123) and partially sent to the drain through the lines (126 and 127), respectively. The solid part is sent to the heat treatment/drying section.

The drying section, located downstream of the reactivation section, comprises a heating unit (128), for example a rotary oven, preferably heated by means of the hot air flow coming from the regeneration section through the line (122). Alternatively, the heating unit is heated with other means.

The regenerated bleaching earths leave the heating unit ready for use in a plant for the production of biofuel.

## Claims

1. Method of treatment and/or regeneration of spent bleaching earths from a plant for the production of biofuels **characterized by** the steps of:
(a) Mixing the spent bleaching earths with neutral and/or gummy acid water from a plant for the production of biofuels and pre-treating the mixture with a base until a neutral pH is achieved;
(b) subjecting the neutralised mixture to anaerobic digestion by contact with a bacterial biomass at a temperature below 100°C, preferably between 50°C and 80°C, resulting in the formation of a solid/liquid suspension and simultaneous development of biogas;
(c) separating the solid/liquid suspension into a solid component comprising bleaching earths and a liquid component comprising digestate;
(d) subjecting the solid component, comprising the bleaching earths, to heat treatment at a temperature between 400°C and 600°C, preferably between 400°C and 500°C;
(e) subjecting the solid component comprising the bleaching earths to a reactivation step by contact with an acid solution;
(f) subjecting the solid component comprising the bleaching earths, to a drying heat treatment.

2. Method according to claim 1, wherein in step a) the base is calcium hydroxide, caustic soda and/or milk of lime.

3. Method according to claim 1 or 2, wherein the anaerobic digestion of step b) takes place for a time between 21 and 28 days, preferably between 22 and 25 days.

4. Method according to any one of claims 1 to 3, wherein the biomass of step b) comprises anaerobic bacteria, preferably recycled/recovered from other digesters.

5. Method according to any one of claims 1 to 4, wherein the biogas developed in step b) is subjected to a purification step b1) to remove H₂S, said step comprising an abatement of H₂S by passing the biogas through at least one catalytic iron filter and/or a further abatement of residual H₂S by passing through at least one activated carbon absorber.

6. Method according to claim 5, wherein step b1) comprises a further treatment for removing siloxanes by passing the biogas through at least one catalytic absorber, preferably through at least two catalytic absorbers.

7. Method according to any one of claims 1 to 6, wherein step e) of reactivation comprises a subsequent step of separating the acid solution from the solid component comprising the bleaching earths, wherein the acid solution is preferably reused at least in part for reactivating the bleaching earths and, in part, sent for disposal.

8. Plant for treating and/or regenerating spent bleaching earths from a plant for the production of biofuels **characterized by**:
(a) a pre-treatment section comprising:
- a neutralisation reactor (100);
- at least a first line (101) connected to a plant for the production of biofuel in order to feed spent bleaching earths into the neutralisation reactor;
- at least a second line (102) for feeding neutral water or acid water from a plant for the production of biofuel into the neutralisation reactor;
(b) an anaerobic digestion section comprising:
- at least two anaerobic digesters (105, 106) into which the neutral suspension of bleaching earths from the neutralisation reactor is fed;
- at least one line that connects the neutralisation reactor to the digesters and serves to convey the neutral suspension of bleaching earths from the neutralisation reactor into the digesters;
- at least one line (107) to transport the digestate to the next section (c);
- at least two gasometers (109, 110), each connected to a digester through lines (111), to collect the biogas produced;
(c) a dehydration/separation section comprising:
- at least one separation unit (117) preferably comprising a solid/liquid separator operating by gravity and/or a centrifuge (117a);
- a line (118) coming out of at least one separation unit (117 and/or 117a) in order to transport the liquid component comprising the digestate to a waste water treatment section and/or to the drain;
- a line (119) coming out from the at least one separation unit in order to transport the solid component comprising bleaching earths to the regeneration section (d);
(d) a regeneration section comprising:
- at least one heating unit (120) for the heat treatment of the solid component comprising bleaching earths from the dehydration section and the generation of dioxin-containing fumes;
(e) a reactivation section comprising:
- at least one reactor (123) wherein the bleaching earths from the heating unit (120) are brought into contact with an acid solution;
- a separator (124) to separate the acid solution from the bleaching earths at the end of reactivation;
(f) a drying section comprising:
- a heating unit (128) in which the acidified bleaching earths are heated to remove excess moisture.

9. Plant according to claim 8, comprising a purification section comprising:
- at least two reactors for the abatement/removal of H₂S (112, 113) and at least one reactor for the removal of siloxanes (114);
- a line (115) connecting the at least two gasometers to the purification section.

10. Plant according to claim 8 or 9, comprising a line (103) for conveying a hot fluid, preferably hot water, from a tank heated by the heat generated by the regeneration d) and drying f) sections, to the neutralisation reactor (100) and/or to the at least two digesters (105, 106).

11. Plant according to any one of claims 8 to 10, comprising a second heating unit (121) for treating the fumes generated by the first heating unit (120).

## Patentansprüche

1. Verfahren zur Behandlung und/oder Regenerierung von gebrauchten Bleicherden aus einer Anlage zur Herstellung von Biokraftstoffen, **gekennzeichnet durch** die folgenden Schritte:
(a) Mischen der gebrauchten Bleicherden mit neutralem und/oder gummihaltigem Säurewasser aus einer Anlage zur Herstellung von Biokraftstoffen und Vorbehandeln der Mischung mit einer Base, bis ein neutraler pH-Wert erreicht ist;
(b) Unterziehen der neutralisierten Mischung einer anaeroben Vergärung durch Kontakt mit einer bakteriellen Biomasse bei einer Temperatur unter 100 °C, vorzugsweise zwischen 50 °C und 80 °C, was zur Bildung einer festen/flüssigen Suspension und gleichzeitiger Entwicklung von Biogas führt;
(c) Trennen der festen/flüssigen Suspension in eine feste Komponente, die Bleicherden umfasst, und eine flüssige Komponente, die Gärrest umfasst;
(d) Unterziehen der festen Komponente, die die Bleicherden umfasst, einer Wärmebehandlung bei einer Temperatur zwischen 400 °C und 600 °C, vorzugsweise zwischen 400 °C und 500 °C;
(e) Unterziehen der festen Komponente, die die Bleicherden umfasst, einem Reaktivierungsschritt durch Kontakt mit einer Säurelösung;
(f) Unterziehen der festen Komponente, die die Bleicherden umfasst, einer Trocknungswärmebehandlung.

2. Verfahren nach Anspruch 1, wobei in Schritt a) die Base Calciumhydroxid, Ätznatron und/oder Kalkmilch ist.

3. Verfahren nach Anspruch 1 oder 2, wobei die anaerobe Vergärung von Schritt b) für einen Zeitraum zwischen 21 und 28 Tagen, vorzugsweise zwischen 22 und 25 Tagen, stattfindet.

4. Verfahren nach einem der Ansprüche 1 bis 3, wobei die Biomasse von Schritt b) anaerobe Bakterien umfasst, die vorzugsweise aus anderen Fermentern recycelt/gewonnen werden.

5. Verfahren nach einem der Ansprüche 1 bis 4, wobei das in Schritt b) entwickelte Biogas einem Reinigungsschritt b1) unterzogen wird, um H₂S zu entfernen, wobei der Schritt ein Reduzieren von H₂S durch Leiten des Biogases durch mindestens einen katalytischen Eisenfilter und/oder ein weiteres Reduzieren von restlichem H₂S durch Leiten durch mindestens einen Aktivkohleabsorber umfasst.

6. Verfahren nach Anspruch 5, wobei Schritt b1) eine weitere Behandlung zur Entfernung von Siloxanen umfasst, indem das Biogas durch mindestens einen katalytischen Absorber, vorzugsweise durch mindestens zwei katalytische Absorber geleitet wird.

7. Verfahren nach einem der Ansprüche 1 bis 6, wobei Schritt e) der Reaktivierung einen nachfolgenden Schritt zum Abtrennen der Säurelösung von der festen Komponente, die die Bleicherden umfasst, umfasst, wobei die Säurelösung vorzugsweise zumindest teilweise wiederverwendet wird, um die Bleicherden zu reaktivieren, und teilweise der Entsorgung zugeführt wird.

8. Anlage zur Behandlung und/oder Regenerierung gebrauchter Bleicherden aus einer Anlage zur Herstellung von Biokraftstoffen, **gekennzeichnet durch**:
(a) eine Vorbehandlungssektion, umfassend:
- einen Neutralisationsreaktor (100);
- mindestens eine erste Leitung (101), die mit einer Anlage zur Herstellung von Biokraftstoff verbunden ist, um gebrauchte Bleicherden in den Neutralisationsreaktor einzuspeisen;
- mindestens eine zweite Leitung (102) zum Einspeisen von neutralem Wasser oder saurem Wasser aus einer Anlage zur Herstellung von Biokraftstoff in den Neutralisationsreaktor;
(b) eine Sektion für die anaerobe Vergärung, umfassend:
- mindestens zwei anaerobe Fermenter (105, 106), in die die neutrale Suspension von Bleicherden aus dem Neutralisationsreaktor eingespeist wird;
- mindestens eine Leitung, die den Neutralisationsreaktor mit den Fermentern verbindet und dazu dient, die neutrale Suspension von Bleicherden aus dem Neutralisationsreaktor in die Fermenter zu befördern;
- mindestens eine Leitung (107) zum Transport des Gärrestes zur nächsten Sektion (c);
- mindestens zwei Gasometer (109, 110), die jeweils über Leitungen (111) mit einem Fermenter verbunden sind, um das erzeugte Biogas zu sammeln;
(c) eine Dehydratisierungs-/Trennungssektion, umfassend:
- mindestens eine Trenneinheit (117), die vorzugsweise einen durch Schwerkraft arbeitenden Fest-Flüssig-Trenner und/oder eine Zentrifuge (117a) umfasst;
- eine Leitung (118), die aus mindestens einer Trenneinheit (117 und/oder 117a) austritt, um die flüssige Komponente, die den Gärrest umfasst, zu einer Abwasserbehandlungssektion und/oder zum Abfluss zu transportieren;
- eine Leitung (119), die aus der mindestens einen Trenneinheit austritt, um die feste Komponente, die Bleicherden umfasst, zu der Regenerierungssektion (d) zu transportieren;
(d) eine Regenerierungssektion, umfassend:
- mindestens eine Heizeinheit (120) zur Wärmebehandlung der festen Komponente, die Bleicherden aus der Dehydratisierungssektion umfasst, und zur Erzeugung dioxinhaltiger Dämpfe;
(e) eine Reaktivierungssektion, umfassend:
- mindestens einen Reaktor (123), wobei die Bleicherden aus der Heizeinheit (120) mit einer Säurelösung in Kontakt gebracht werden;
- einen Trenner (124) zum Abtrennen der Säurelösung von den Bleicherden am Ende der Reaktivierung;
(f) eine Trocknungssektion, umfassend:
- eine Heizeinheit (128), in der die angesäuerten Bleicherden erwärmt werden, um überschüssige Feuchtigkeit zu entfernen.

9. Anlage nach Anspruch 8, umfassend eine Reinigungssektion, umfassend:
- mindestens zwei Reaktoren zur Reduzierung/Entfernung von H₂S (112, 113) und mindestens einen Reaktor zur Entfernung von Siloxanen (114);
- eine Leitung (115), die die mindestens zwei Gasometer mit der Reinigungssektion verbindet.

10. Anlage nach Anspruch 8 oder 9, umfassend eine Leitung (103) zum Fördern eines heißen Fluids, vorzugsweise heißes Wasser, aus einem Tank, der durch die durch die Regenerierungs- d) und Trocknungssektionen f) erzeugte Wärme beheizt wird, zu dem Neutralisationsreaktor (100) und/oder zu den mindestens zwei Fermentern (105, 106).

11. Anlage nach einem der Ansprüche 8 bis 10, umfassend eine zweite Heizeinheit (121) zur Behandlung der von der ersten Heizeinheit (120) erzeugten Dämpfe.

## Revendications

1. Procédé de traitement et/ou de régénération de terres de blanchiment usées provenant d'une installation de production de biocarburants, **caractérisé par** les étapes suivantes :
(a) mélanger les terres de blanchiment usées avec de l'eau acide neutre et/ou gommeuse provenant d'une installation de production de biocarburants et prétraiter le mélange avec une base jusqu'à ce qu'un pH neutre soit atteint ;
(b) soumettre le mélange neutralisé à une digestion anaérobie par contact avec une biomasse bactérienne à une température inférieure à 100°C, de préférence comprise entre 50°C et 80°C, entraînant la formation d'une suspension solide/liquide et le développement simultané de biogaz ;
(c) séparer la suspension solide/liquide en un composant solide comprenant des terres de blanchiment et un composant liquide comprenant du digestat ;
(d) soumettre le composant solide, comprenant les terres de blanchiment, à un traitement thermique à une température comprise entre 400°C et 600°C, de préférence entre 400°C et 500°C ;
(e) soumettre le composant solide, comprenant les terres de blanchiment, à une étape de réactivation par contact avec une solution acide ;
(f) soumettre le composant solide, comprenant les terres de blanchiment, à un traitement thermique de séchage.

2. Procédé selon la revendication 1, dans lequel dans l'étape a) la base est l'hydroxyde de calcium, la soude caustique et/ou le lait de chaux.

3. Procédé selon la revendication 1 ou 2, dans lequel la digestion anaérobie de l'étape b) a lieu pendant une durée comprise entre 21 et 28 jours, de préférence entre 22 et 25 jours.

4. Procédé selon l'une quelconque des revendications 1 à 3, dans lequel la biomasse de l'étape b) comprend des bactéries anaérobies, de préférence recyclées/récupérées à partir d'autres digesteurs.

5. Procédé selon l'une quelconque des revendications 1 à 4, dans lequel le biogaz développé à l'étape b) est soumis à une étape de purification b1) pour éliminer H₂S, ladite étape comprenant une réduction de H₂S en faisant passer le biogaz à travers au moins un filtre catalytique en fer et/ou une réduction supplémentaire de H₂S résiduel en passant à travers au moins un absorbeur à charbon actif.

6. Procédé selon la revendication 5, dans lequel l'étape b1) comprend un traitement supplémentaire pour éliminer les siloxanes en faisant passer le biogaz à travers au moins un absorbeur catalytique, de préférence à travers au moins deux absorbeurs catalytiques.

7. Procédé selon l'une quelconque des revendications 1 à 6, dans lequel l'étape e) de réactivation comprend une étape ultérieure de séparer la solution acide du composant solide comprenant les terres de blanchiment, dans lequel la solution acide est de préférence réutilisée au moins en partie pour réactiver les terres de blanchiment et, en partie, envoyée pour élimination.

8. Installation de traitement et/ou de régénération des terres de blanchiment usées provenant d'une installation de production de biocarburants, **caractérisée par** :
(a) une section de prétraitement, comprenant :
- un réacteur de neutralisation (100) ;
- au moins une première ligne (101) reliée à une installation de production de biocarburant afin d'alimenter les terres de blanchiment usées dans le réacteur de neutralisation ;
- au moins une deuxième ligne (102) d'alimentation en eau neutre ou en eau acide provenant d'une installation de production de biocarburant dans le réacteur de neutralisation ;
(b) une section de digestion anaérobie, comprenant :
- au moins deux digesteurs anaérobies (105, 106) dans lesquels est alimentée la suspension neutre de terres de blanchiment provenant du réacteur de neutralisation ;
- au moins une ligne qui relie le réacteur de neutralisation aux digesteurs et sert à acheminer la suspension neutre de terres de blanchiment provenant du réacteur de neutralisation dans les digesteurs ;
- au moins une ligne (107) pour transporter le digestat vers la section suivante (c) ;
- au moins deux gazomètres (109, 110), chacun relié à un digesteur par des lignes (111), pour collecter le biogaz produit ;
(c) une section de déshydratation/séparation, comprenant :
- au moins une unité de séparation (117) comprenant de préférence un séparateur solide/liquide fonctionnant par gravité et/ou une centrifugeuse (117a) ;
- une ligne (118) sortant d'au moins une unité de séparation (117 et/ou 117a) afin de transporter le composant liquide comprenant le digestat vers une section de traitement des eaux usées et/ou vers la vidange ;
- une ligne (119) sortant de l'au moins une unité de séparation afin de transporter le composant solide comprenant des terres de blanchiment vers la section de régénération (d) ;
(d) une section de régénération, comprenant :
- au moins une unité de chauffage (120) pour le traitement thermique du composant solide comprenant des terres de blanchiment provenant de la section de déshydratation et la génération de fumées contenant de la dioxine ;
(e) une section de réactivation, comprenant :
- au moins un réacteur (123) dans lequel les terres de blanchiment provenant de l'unité de chauffage (120) sont mises en contact avec une solution acide ;
- un séparateur (124) pour séparer la solution acide des terres de blanchiment en fin de réactivation ;
(f) une section de séchage, comprenant :
- une unité de chauffage (128) dans laquelle les terres de blanchiment acidifiées sont chauffées pour éliminer l'excès d'humidité.

9. Installation selon la revendication 8, comprenant une section de purification, comprenant :
- au moins deux réacteurs pour la réduction/élimination du H₂S (112, 113) et au moins un réacteur pour l'élimination des siloxanes (114) ;
- une ligne (115) reliant les au moins deux gazomètres à la section de purification.

10. Installation selon la revendication 8 ou 9, comprenant une ligne (103) pour acheminer un fluide chaud, de préférence de l'eau chaude, provenant d'un réservoir chauffé par la chaleur générée par les sections de régénération d) et de séchage f), vers le réacteur de neutralisation (100) et/ou vers les au moins deux digesteurs (105, 106).

11. Installation selon l'une quelconque des revendications 8 à 10, comprenant une deuxième unité de chauffage (121) pour traiter les fumées générées par la première unité de chauffage (120).
